# EUROPÄISCHE PATENTSCHRIFT

(11) **EP 1 437 487 B1**
(45) Veröffentlichungstag und Bekanntmachung des Hinweises auf die Patenterteilung: **08.06.2005**
(21) Anmeldenummer: 03029870.7
(22) Anmeldetag: 27.12.2003
(51) Int. Cl.: F01N 3/022, F01N 3/027, B01D 46/24, B01D 46/42

(54) **Heizungseinrichtung für einen Filter, insbesondere einen Dieselrussfilter, sowie Filter**
Heating device for filtering element especially for a particle filter and particle filter
Dispositif de chauffage pour élément filtrant, en particulier pour un filtre à particules d'un moteur diesel, ainsi que le filtre à particules

(30) Priorität: 08.01.2003 DE 10300718
(43) Veröffentlichungstag der Anmeldung: 14.07.2004
(73) Patentinhaber: E.G.O. ELEKTRO-GERÄTEBAU GmbH, D-75038 Oberderdingen (DE)
(72) Erfinder: Kicherer, Robert, 75038 Oberderdingen (DE); Ose, Lutz, Dr., 75447 Sternenfels (DE); Seidler, Christian, 75015 Bretten (DE)
(74) Vertreter: Patentanwälte Ruff, Wilhelm, Beier, Dauster & Partner

(56) Entgegenhaltungen:
- EP-A- 0 454 346
- EP-A- 1 260 262
- US-A- 4 456 457
- US-A- 5 409 669

## Beschreibung

Die Erfindung betrifft eine Heizungseinrichtung gemäß dem Oberbegriff des Anspruchs 1 für einen Filter, insbesondere einen Dieselrußfilter eines Kfz, sowie einen solchen Filter insgesamt.

Moderne Dieselmotoren weisen aus Umweltschutzgründen Dieselrußfilter auf, mit denen die als schädlich eingestuften Rußpartikel aus den Abgasen herausgefiltert werden sollen. Dabei besteht das Problem, dass die Dieselrußfilter relativ schnell mit dem Ruß zusetzen und sozusagen verstopfen. Hierzu sind Heizungen bekannt, mit denen der Ruß von dem Filter mit der ausreichenden Temperatur weggebrannt werden kann.

Eine derartige Heizeinrichtung ist aus der DE 10127223 A bekannt. Sie weist einen dünnen Rohrheizkörper auf, der zwischen Filterflächen verläuft.

Eine weitere derartige Heizeinrichtung ist aus der US-A-4456457 bekannt. Dort ist in Fig. 12 offenbart, dass mehrere elektrische Heizungen einer Abgasreinigungseinrichtung zum Teil gemeinsam auf einen einzigen Anschluss zusammengeführt sind. Details der genauen Ausbildung des Anschlusses gehen daraus jedoch nicht hervor.

### Anwendungsgebiet und Stand der Technik

Es ist Aufgabe der Erfindung, eine eingangs genannte Heizungseinrichtung zu schaffen, die für den Einsatz in einem Filter oder einem Dieselrußfilter geeignet ist und insbesondere eine einfache und vorteilhafte mechanische Anbringung sowie elektrische Kontaktierung ermöglicht. Ebenso soll ein solcher Filter mit einer möglichst geeigneten Heizung geschaffen werden.

Gelöst wird diese Aufgabe durch eine Heizungseinrichtung mit den Merkmalen des Anspruchs 1 und einen Filter mit den Merkmalen des Anspruchs 16. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß weist eine Heizungseinrichtung einen dünnen Rohrheizkörper sowie eine Verbindungseinrichtung für den elektrischen Anschluss des Rohrheizkörpers auf. Die Verbindungseinrichtung ist dabei für mehrere Rohrheizkörper ausgebildet, beispielsweise drei oder vier Rohrheizkörper. Sie weist ein Gehäuse auf, in welchem die Heizleiter der Rohrheizkörper zusammengeführt sind. Dies erfolgt auf einen elektrischen Anschluss, der im folgenden als einziger erster elektrischer Anschluss bezeichnet wird. Des weiteren ist die Verbindungseinrichtung der Heizungseinrichtung dazu ausgebildet, mindestens teilweise, also unter Umständen zusammen mit anderen Einrichtungen, den bzw. die Rohrheizkörper mechanisch zu befestigen. Somit trägt die Verbindungseinrichtung einerseits zum elektrischen Anschluss der Rohrheizkörper bei. Des weiteren ist sie dazu mit den Rohrheizkörpern verbunden, und über diese Verbindung hilft sie, den Rohrheizkörper zu befestigen.

Wenn mehrere Rohrheizkörper vorgesehen sind, können sie vorteilhaft parallel zueinander und nebeneinander verlaufen. Dies weist den Vorteil auf, dass sie eine gleichmäßige Beheizung bewirken.

Die Mäntel der Rohrheizkörper können an das Gehäuse der Verbindungseinrichtung geführt und daran befestigt sein. Eine solche Befestigung ist vorteilhaft unlösbar ausgebildet, damit die Befestigung auch sicher und dauerhaft ist. Besonders vorteilhaft sind die Mäntel der Rohrheizkörper an das Gehäuse der Verbindungseinrichtung angeschweißt.

Es ist möglich, insbesondere zum Schweißen empfohlen, das Gehäuse aus Metall auszubilden. Dadurch ist es weiter möglich, den Mantel elektrisch leitend daran zu befestigen. So kann das Gehäuse beispielsweise den zweiten elektrischen Anschluss für die Rohrheizkörper bilden. Dies kann dann der Masseanschluss sein.

Der erste elektrische Anschluss kann dabei derart ausgebildet sein, dass er eine gemeinsame Anschlussschiene ist oder aufweist. An diese Anschlussschiene sind dann die Heizleiter der Rohrheizkörper befestigt. Eine solche Anschlussschiene kann von einem der Heizleiter zu den anderen verlaufen, somit beispielsweise senkrecht zur Längsrichtung der Heizleiter oder Rohrheizkörper. Die Heizleiter sind vorteilhaft ohne Biegung oder Umlenkung mit der Anschlussschiene verbunden, beispielsweise verschweißt.

Der erste elektrische Anschluss kann in einen Anschlussstift übergehen, vorteilhaft in einen einzigen Anschlussstift. Dazu können diese Teile einteilig ausgebildet sein, beispielsweise etwa T-förmig. Der Anschlussstift wiederum kann aus dem Gehäuse herausragen, insbesondere in Längsrichtung der Heizleiter. So kann er leicht erreicht werden, wozu er vorteilhaft zumindest teilweise frei liegen kann.

Es ist möglich, an dem Gehäuse eine rohrartige Hülse anzubringen bzw. anzuschweißen, die über dem Anschlussstift mit einem gewissen Abstand dazu verläuft. Die Hülse kann metallisch sein, wodurch eine gewisse mechanische Stabilität gewährleistet ist sowie das Verschweißen möglich ist. Vorteilhaft ist die Hülse kürzer als der Anschlussstift. Dies bewirkt, dass der Anschlussstift ein Stück aus der Hülse herausragen bzw. über diese hinüber ragen kann.

In weiterer Ausgestaltung der Erfindung kann noch vorgesehen sein, dass die Hülse eine Dichtung aufweist. Diese Dichtung steht vorteilhaft über die Hülse über, insbesondere sogar noch über den Anschlussstift, welchen sie umschließt. Die Hülse kann elektrisch isolierend bzw. thermisch dämmend sein. Vorteilhaft ist sie elastisch, was ihre Dichtungswirkung verstärkt. Der Vorteil einer solchen Dichtung ist der, dass keinerlei Feuchtigkeit in das Gehäuse der Verbindungseinrichtung eindringen kann, was vor Korrosion schützt.

An dem Anschlussstift kann eine Zuleitung sitzen. Diese kann eine Zuleitungslitze sein mit einer Außenisolierung, wie sie in einem Kfz eingebaut wird. Vorteilhaft ist die Zuleitung an den Anschlussstift angeschweißt für eine dauerhafte Verbindung, wobei sie am anderen Ende eine Steckverbindung trägt. Auf diese Weise ist die Steckverbindung ausreichend weit von den hohen Temperaturen der Heizungseinrichtung entfernt und somit geschützt.

Die Dichtung sollte eine dichtende Verbindung zwischen Zuleitung und Hülse und somit auch zwischen Zuleitung und Gehäuse der Verbindungseinrichtung herstellen. So kann vorteilhaft die vorgenannte Dichtungswirkung erreicht werden. Als Material für eine solche Dichtung stehen grundsätzlich viele Materialien zur Auswahl, die einerseits elastisch sind und andererseits eine gewisse Temperaturbeständigkeit aufweisen.

Als besonders vorteilhaft wird hier PTFE oder Silikon angesehen, sofern das Silikon ausreichend temperaturfest ist.

Die Dichtung ist vorteilhaft in der Hülse befestigt, so dass sie bei der Montage nicht verloren gehen kann und im Gebrauch nicht verrutscht. Dazu kann sie beispielsweise in der Hülse eingeklemmt sein. Hierfür bietet sich beispielsweise eine Einbördelung des Endes der Hülse, über welches die Dichtung innenliegend übersteht, nach innen an. Um die Dichtungswirkung noch zu verbessern, kann eine Zusatzdichtung vorgesehen sein. Sie kann zwischen Dichtung und Hülse bzw. zwischen Dichtung und Zuleitung vorgesehen sein und, beispielsweise als noch weichere und elastischere Dichtung, ringförmig oder hülsenförmig an Zuleitung oder Hülse anliegen.

Des weiteren ist es möglich, zur Montageerleichterung der Dichtung an der Hülse eine umlaufende, nach innen engere Abstufung der Hülse zum Gehäuse hin vorzusehen. Diese wirkt als Anschlag der Dichtung. So kann die Dichtung bis zu diesem Anschlag in die Hülse hineingeführt werden und hat somit die vorgesehene Montagestellung.

Zwischen dem Anschlussstift und der Hülse kann die Verbindungseinrichtung eine Isolierung aufweisen. Dies bietet sich insbesondere dann an, wenn das Gehäuse und somit auch die Hülse den Masseanschluss für die Rohrheizkörper bildet und der Anschlussstift den ersten elektrischen Anschluss für die Heizleiter bildet. Als lsolierung bieten sich hier keramische Vergussmassen an, welche auch den hohen Temperaturen der Rohrheizkörper standhalten. Die Verbindungseinrichtung ist vorteilhaft derart gestaltet, dass die Dichtung einer Temperatur von maximal 250° ausgesetzt ist.

Es ist möglich, über die Hülse einen Schrumpfschlauch zu führen, der sich bis zu einer Zuleitungslitze erstreckt und diese übergreift. Ein solcher Schrumpfschlauch kann beispielsweise anstelle einer vorgenannten Dichtung, aber auch zusätzlich dazu, vorgesehen sein. Der Schrumpfschlauch sollte, wie zuvor angesprochen, eine gewisse thermische Beständigkeit aufweisen.

Des weiteren ist es möglich, das Gehäuse der Verbindungseinrichtung an einer Außenwandung des Filtergehäuses zu befestigen. Dazu kann, um die Rohrheizkörper für den elektrischen Anschluss aus dem Filtergehäuse zu führen, eine Öffnung vorgesehen sein. Diese Öffnung kann mit der Verbindungseinrichtung bzw. dem Gehäuse verschlossen werden, insbesondere gasdicht. Hierzu kann das Gehäuse der Verbindungseinrichtung beispielsweise an das Filtergehäuse angeschweißt sein, vorteilhaft mit einer Dichtschweißung. Ein Verbinden bzw. Verschweißen des Gehäuses der Verbindungseinrichtung mit dem Filtergehäuse weist den Vorteil auf, dass so auch beispielsweise ein gemeinsamer Masseanschluss hergestellt werden kann.

Für den Aufbau der Verbindungseinrichtung ist es von Bedeutung, nicht nur die Dichtung derart anzubringen, dass sie eine maximale Temperatur nicht überschreitet. Ebenso sollte eine Zuleitung sowie eine Verschweißung des Anschlussstiftes mit der Zuleitung eine gewisse Temperatur nicht übersteigen. Ansonsten wären die Materialien oder Verbindungen vor Beschädigungen nicht sicher.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen im einzelnen:
- Figur 1: eine erfindungsgemäße Heizungseinrichtung mit einer Verbindungseinrichtung im Schnitt,
- Figur 2: eine Innenansicht eines rundzylindrischen Dieselrußfilters mit eingebauter Heizungseinrichtung,
- Figur 3: eine Seitendarstellung der Anordnung aus Figur 2,
- Figur 4: einen Teilschnitt durch eine Abwandlung des Gehäuses eines erfindungsgemäßen Filters ähnlich Figur 1 mit einer angeschlossenen Zuleitung,
- Figur 5: eine Abwandlung des Gehäuses ähnlich Figur 4 und
- Figur 6: eine Abwandlung einer Heizeinrichtung in einem Filter mit einem Gehäuse einer Verbindungseinrichtung für zwei Rohrheizkörper.

### Detaillierte Beschreibung der Ausführungsbeispiele

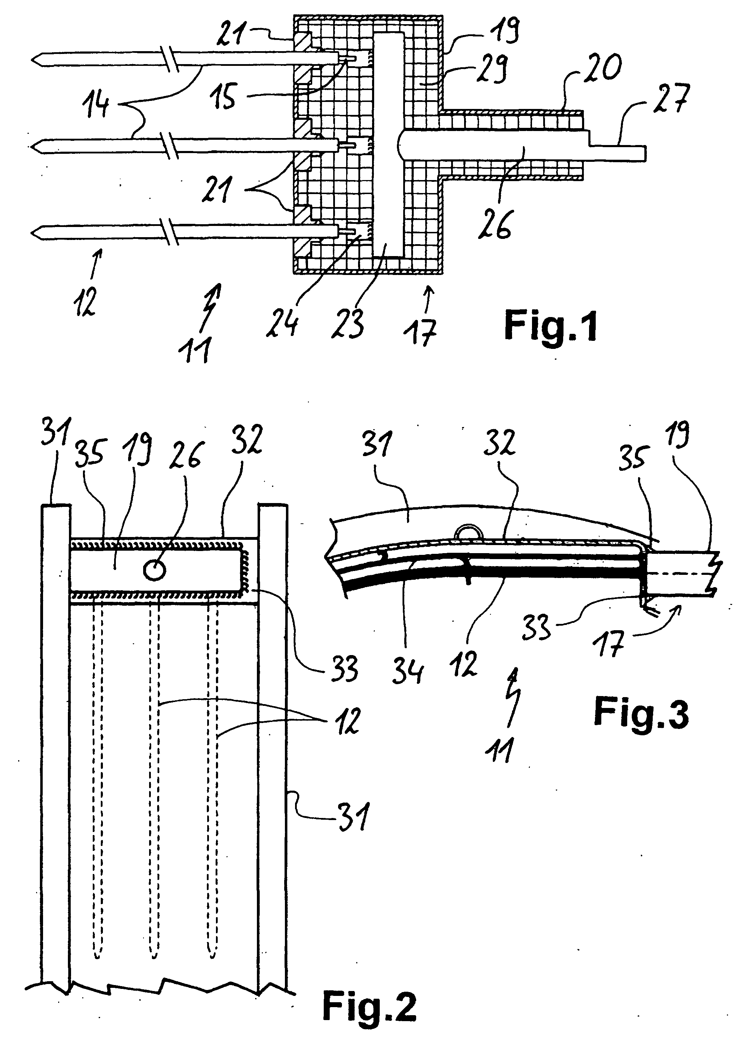

In Figur 1 ist eine erste Ausführung einer erfindungsgemäßen Heizungseinrichtung 11 dargestellt. Sie besteht einerseits aus dünnen Rohrheizkörpern 12, von denen die Heizungseinrichtung 11 drei Stück aufweist. Die Rohrheizkörper 11 wiederum weisen jeweils einen Mantel 14 und einen darin verlaufenden, gegenüber dem Mantel isolierten Heizleiter 15 auf. Rohrheizkörper 12 sind an sich im Stand der Technik bekannt. Insbesondere wird hier auf die DE 10127223.5 hingewiesen.

Die Rohrheizkörper 12 der Heizeinrichtung 11 laufen in eine Verbindungseinrichtung in Form eines Anschlusses 17. Der Anschluss 17 wiederum weist ein Gehäuse 19 auf, vorteilhaft aus Metall. Dieses ist an sich in etwa rechteckig. Dabei geht es einstückig in eine nach rechts weisende Hülse 20 über. Die Rohrheizkörper 12 sind dabei mittels Verschlussstopfen 21 in dem Anschluss 17 bzw. an dem Gehäuse 19 gehaltert. Die Verschlussstopfen 21 können metallisch sein und, beispielsweise durch eine entsprechende Schweißverbindung, eine elektrische Verbindung zwischen den Mänteln 14 und dem Gehäuse 19 des Anschlusses 17 herstellen. Mäntel 14 und Verschlussstopfen 21 können mittels einer Laserumfangs-Schweißung zur sicheren Verbindung verbunden sein. Verschlussstopfen 21 und Gehäuse 19 wiederum können mittels einer WIG-Schweißung verbunden sein. So ist ein elektrischer Anschluss an die Rohrheizkörper 12 möglich, beispielsweise als Masseanschluss.

Des weiteren enthält der Anschluss 17 eine Anschlussschiene 23, welche quer zu dem Verlauf der Rohrheizkörper 12 angeordnet ist und sich über deren Spannbreite erstreckt. Die Anschlussschiene 23 weist in Richtung auf die Rohrheizkörper 12 weisende Anschlussfahnen 24 auf, welche beispielsweise angeschweißt sind. An die Anschlussfahnen 24 wiederum sind die Heizleiter 15 der Rohrheizkörper 12 befestigt, insbesondere angeschweißt oder kontaktgeheftet.

In der anderen Richtung geht die Anschlussschiene 23 in einen Anschlussstift 26 über. Dies kann einstückig sein oder mit einer Schweißverbindung. Der Anschlussstift 26 reicht aus dem Gehäuse 19 entlang der Mittelachse der Hülse 20. Dabei steht ein Stück über das Ende der Hülse 20 über, und zwar mit einer Anschlussfläche 27. Diese ist hier als Abflachung ausgebildet, könnte jedoch auch andere Form aufweisen.

Das Gehäuse 19 ist mit einer Vergussmasse 29 gefüllt, welche isolierend ist, beispielsweise als keramische Vergussmasse. So werden die Anschlüsse der Heizleiter 15 an die Anschlussfahnen 24, die Verbindung der Rohrheizkörper 12 an dem Gehäuse 19 sowie die sichere und isolierte Lage des Anschlussstiftes 26 innerhalb des Gehäuses 19 sowie innerhalb der Hülse 20 gesichert. Die Verbindung der Rohrheizkörper 12 bzw. der Mäntel 14 an das Gehäuse 19 wird durch die Vergussmasse 29 noch verstärkt. Vor allem aber obliegt sie dem Verschlussstopfen 21 bei dieser Ausführung.

Wie aus Figur 1 zu erkennen ist, können somit auf einfache Art und Weise drei Rohrheizkörper 12 an einen einzigen Anschluss, nämlich den Anschlussstift 26, geführt werden. Gleichzeitig ist dabei ein Masseanschluss für die Rohrheizkörper 12 über das metallische Gehäuse 19 des Anschlusses 17 möglich.

In Figur 2 ist ein beispielhafter Aufbau eines rundzylindrischen Dieselrußfilters dargestellt. Zwischen zwei scheibenförmigen Filterflanschen 31 ist die Heizungseinrichtung 11 angeordnet. Zu dem Gehäuse 19 des Anschlusses 17 hin weist die Seitenwand 32 eine Abwinkelung 33 nach innen auf, welche in etwa rechtwinklig ist. An dieser ist das Gehäuse 19 mittels der Schweißnähte 35 festgeschweißt. So erfolgt eine Befestigung und beispielsweise ein Masseanschluss an die Rohrheizkörper 12.

Parallel zu der Seitenwand 32 verläuft eine Halterung 34, mit welcher die Rohrheizkörper 12 an der Seitenwand 32 bzw. an dem Dieselrußfilter gehaltert werden. Eine solche Halterung ist aus der DE 10300717 A zu entnehmen, deren Inhalt diesbezüglich durch ausdrückliche Bezugnahme zum Inhalt dieser Beschreibung gemacht wird.

Die Seitenwand 32 ist dabei dichtend mit den Filterflanschen 31 verbunden. Das Festschweißen des Gehäuses 19 an der Seitenwand 32 bzw. dem Abschnitt mit der Abwinkelung 33 hat den Vorteil, wie auch aus Figur 2 zu entnehmen ist, dass hier eine Abdichtung möglich ist.

Des weiteren ist zu erkennen, dass das Gehäuse 19 bzw. jeweils das Gehäuse der Heizungseinrichtung mit der Seitenwand 32 und somit dem Filter an sich fest verbunden ist. Dadurch erfolgt eine gewisse Befestigung der Heizeinrichtung bzw. der an dem Gehäuse 19 befestigten Rohrheizkörper 12. So kann beispielsweise durch die Halterung 34 lediglich eine ungefähre Befestigung vorgenommen werden, welche beispielsweise noch eine Bewegung in Längsrichtung erlauben würde. Durch das Festschweißen des Gehäuses 19 an der Seitenwand 32 bzw. der Abwinkelung 33 erfolgt die endgültige Festlegung.

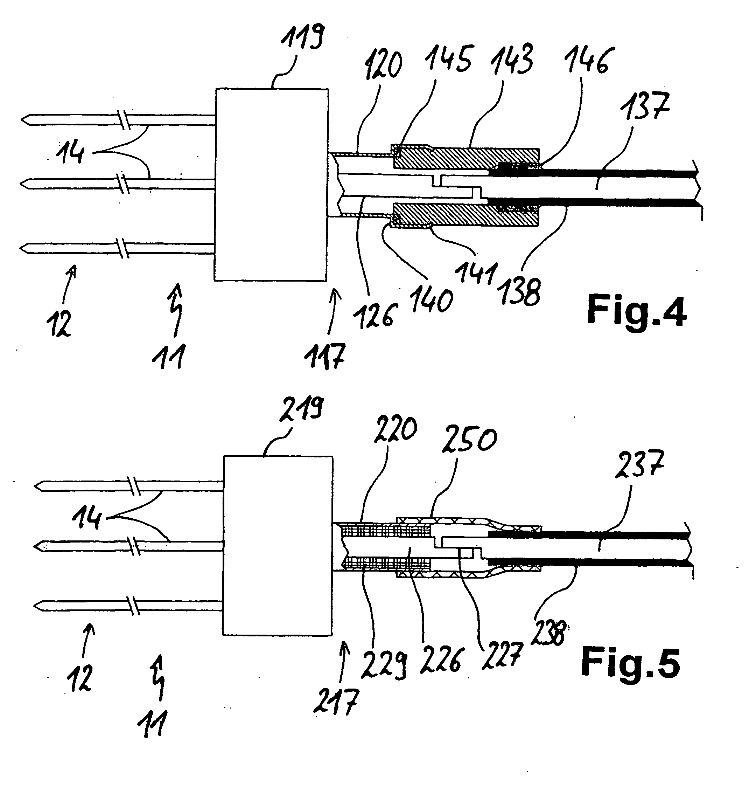

In Figur 4 ist eine weitere Heizeinrichtung 112 ähnlich derjenigen aus Figur 1 dargestellt. Hier interessiert vor allem der rechte Bereich, welcher im Schnitt dargestellt ist. Von dem Gehäuse 119 steht, beispielsweise einteilig, eine Hülse 120 ab. Darin verläuft der Anschlussstift 126. Die Hülse 120 weist einen Absatz 140 auf, welcher eine Durchmesserverbreiterung der Hülse bewirkt. Am Ende der Hülse 120 weist sie eine Biegung 141 nach innen auf, beispielsweise durch Eindrücken des Randes nach innen.

In die Hülse 120 ist eine Dichtung 143 eingesetzt. Sie kann beispielsweise ein Hohlzylinder aus PTFE sein. Die Dichtung 143 ist dabei bis zum Anschluss an den Absatz 140 in die Hülse 120 eingeschoben. Sie wird mittels der Biegung 141 nach innen darin festgehalten.

Eine Aufgabe der Dichtung 143 ist es, bei einem Gehäuse 119 ohne eine Vergussmasse 29 entsprechend Figur 1, den Anschlussstift 126 von der Hülse 120 isoliert zu halten. Des weiteren kann die Dichtung am linken Ende in den Absatz 140 hinein eine vordere Zusatzdichtung 145 aufweisen. Diese kann beispielsweise aus einem weicheren und dennoch hitzebeständigen Material bestehen. Hierfür bietet sich beispielsweise Silikon an. Eine ähnliche hintere Zusatzdichtung 146 ist am rechten inneren Ende der Dichtung 143 vorgesehen. An den Anschlussstift 126 ist eine Zuleitung 137 mit einer Außenisolierung 138 angeschlossen, beispielsweise durch Festschweißen. Derartige Zuleitungen sind aus dem Stand der Technik bekannt und können als massiver Draht oder aber als Drahtlitze ausgeführt sein.

Die Zusatzdichtungen 145 und 146 bewirken eine absolut dichte, also im wesentlichen gasdichte, Verbindung zwischen Zuleitung 137 bzw. ihrer Außenisolierung 138 und dem Gehäuse 119. Dabei sind die Zusatzdichtungen 145 und 146 in entsprechende Ausnehmungen an der Dichtung 143 eingebracht. So kann verhindert werden, dass Feuchtigkeit oder dergleichen in das Gehäuse 119 eindringt und die elektrische Kontaktierung, beispielsweise durch Korrosion, zerstört oder Kurzschlüsse oder Kriechströme erzeugt.

Eine Abwandlung eines Gehäuses 219 einer Heizeinrichtung 211 ist in Figur 5 dargestellt. Hier weist die Hülse 120 wiederum eine Vergussmasse 229 auf. Somit ist es nicht notwendig, wie bei Figur 4 als Nebenfunktion, den Anschlussstift 226 von der Hülse 220 beabstandet und isoliert zu halten.

Der Anschlussstift 226 ist wiederum mit der Zuleitung 237 verbunden. Über diese Verbindung erstreckt sich ein Schrumpfschlauch 250, wobei jeweils die Hülse 220 und die Außenisolierung 238 der Zuleitung 237 ein Stück überdeckt werden. Dies bewirkt zum einen wieder eine gewisse Dichtungsfunktion zwischen Zuleitung 237 und Gehäuse 219. Des weiteren schützt der Schrumpfschlauch 250 die stromführende Verbindung zwischen Anschlussstift 226 und Zuleitung 237 vor Feuchtigkeit und Korrosion wie zuvor angeführt worden ist. Hier kann ein üblicher, möglichst temperaturbeständiger Schrumpfschlauch 250 verwendet werden.

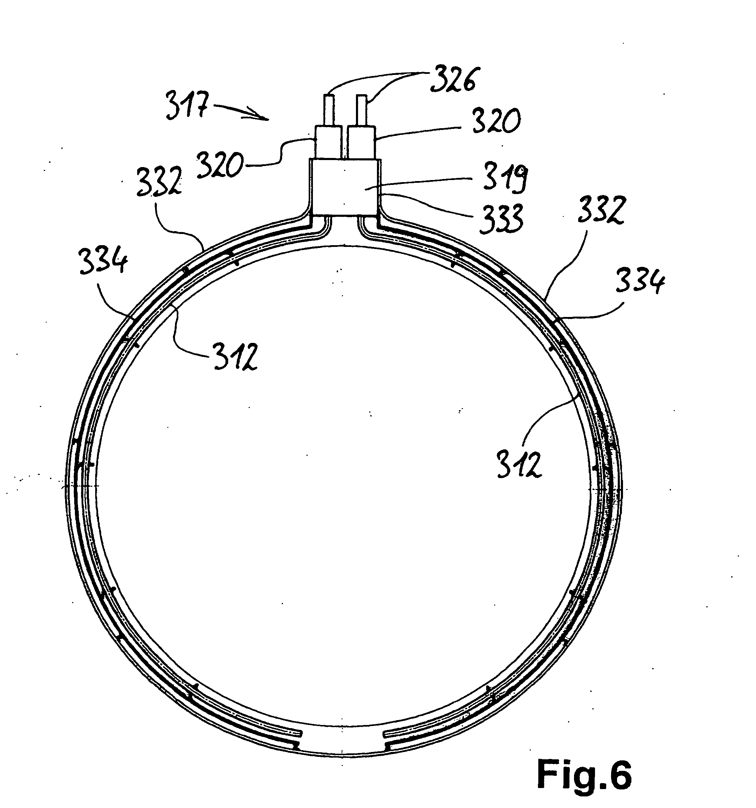

In Figur 6 ist gemäß einer weiteren Möglichkeit der Erfindung dargestellt, wie bei einer Heizungseinrichtung 311 zwei Rohrheizkörper 312 bzw. zwei Reihen von Rohrheizkörpern mit einem einzigen Gehäuse 319 und mit zwei elektrischen Anschlüssen 17 versehen sein können. Die Rohrheizkörper können beispielsweise je drei Rohrheizkörpern entsprechend den Figuren 1 - 5 ausgebildet sein.

Der Aufbau des Rußfilters samt Seitenwänden 332 und Filterflanschen 331 entspricht dem vorbeschriebenen aus den Figuren 2 und 3. Allerdings ist hier die Seitenwand 332 nicht mit einer nach innen weisenden Abwinkelung, sondern mit einer nach außen weisenden Abwinkelung 333 versehen. Diese schließt das Gehäuse 319 von beiden Seiten ein. Die Halterung 334 entspricht derjenigen aus den Figuren 2 und 3.

Von dem Gehäuse 319, in welches die beiden Reihen von Rohrheizkörpern 312 von beiden Seiten hineinlaufen, gehen zwei Hülsen 320 radial nach außen ab. Aus den Hülsen 320 wiederum ragen Anschlussstifte 326 in gleicher Richtung und zentrisch dazu hervor. Dies bedeutet, dass im vorliegenden Fall die Heizleiter der Rohrheizkörper 312 an jeweils einen eigenen Anschlussstift 326 geführt sind. Somit können die linke und die rechte Reihe der Rohrheizkörper 312 unabhängig voneinander betrieben werden. Dies kann vorteilhaft sein für einen getakteten Betrieb zum jeweils links- oder rechtsseitigen Abbrennen von Rußablagerungen in dem Dieselrußfilter. Die Masseanschlüsse an die Rohrheizkörper 312 können wiederum über das Gehäuse 319 und insbesondere die Seitenwände 332 des Filters vorgenommen werden.

## Patentansprüche

1. Heizungseinrichtung (11, 111, 211, 311) für einen Filter (31), insbesondere einen Dieselrußfilter eines Kfz, wobei die Heizungseinrichtung einen dünnen Rohrheizkörper (12, 112, 212, 312) mit innenliegendem Heizleiter (15) und äußerem Mantel (14) sowie Zwischenisolation aufweist, wobei die Heizungseinrichtung eine Verbindungseinrichtung (17, 117, 217, 317) für den elektrischen Anschluss des Rohrheizkörpers aufweist, **dadurch gekennzeichnet, dass** die Verbindungseinrichtung für mehrere Rohrheizkörper ausgebildet ist und ein Gehäuse (19, 119, 219, 319) aufweist, in welchem die Heizleiter der Rohrheizkörper auf einen einzigen ersten elektrischen Anschluss (23, 26) zusammengeführt sind, wobei die Verbindungseinrichtung zusätzlich zur mindestens teilweisen mechanischen Befestigung des Rohrheizkörpers ausgebildet ist.

2. Heizungseinrichtung nach Anspruch 1, **dadurch gekennzeichnet, dass** die Mäntel (14) der Rohrheizkörper (12, 112, 212, 312) an das Gehäuse (19, 119, 219, 319) der Verbindungseinrichtung (17, 117, 217, 317) geführt sind und daran befestigt sind, vorzugsweise unlösbar befestigt sind, wobei sie insbesondere verschweißt sind.

3. Heizungseinrichtung nach Anspruch 2, **dadurch gekennzeichnet, dass** die Mäntel (14) der Rohrheizkörper (12, 112, 212, 312) mit einem Verschlussteil (21) der Verbindungseinrichtung (17, 117, 217, 317) verbunden sind, insbesondere mittels Laserumfangs-Schweißung, und dieses Verschlussteil (21) mit dem Gehäuse (19, 119, 219, 319) verbunden ist.

4. Heizungseinrichtung nach einem der vorhergehenden Ansprüche, **dadurch gekennzeichnet, dass** das Gehäuse (19, 119, 219, 319) metallisch ist und der Mantel (14) elektrisch leitend daran befestigt ist, wobei vorzugsweise das Gehäuse den zweiten elektrischen Anschluss, insbesondere den Masseanschluss, für die Rohrheizkörper (12, 112, 212, 312) bildet.

5. Heizungseinrichtung nach einem der vorhergehenden Ansprüche,
**dadurch gekennzeichnet, dass** der erste elektrische Anschluss eine gemeinsame Anschlussschiene (23) ist, die vorzugsweise senkrecht zur Längsrichtung der Heizleiter (15) verläuft.

6. Heizungseinrichtung nach einem der vorhergehenden Ansprüche, **dadurch gekennzeichnet, dass** der erste elektrische Anschluss in einen einzigen Anschlussstift (26) übergeht, vorzugsweise einteilig, wobei der Anschlussstift aus dem Gehäuse (19, 119, 219, 319) herausragt und davon abragt, insbesondere in Längsrichtung der Heizleiter (15).

7. Heizungseinrichtung nach Anspruch 6, **dadurch gekennzeichnet, dass** über dem Anschlussstift (26) von dem Gehäuse (19, 119, 219, 319) ausgehend eine rohrartige Hülse (20, 120, 220) mit Abstand zu dem Anschlussstift (26) verläuft, wobei vorzugsweise die Hülse metallisch und an dem Gehäuse angeschweißt ist und insbesondere die Hülse (20, 120, 220) kürzer ist als der Anschlussstift (26) und dieser aus ihr herausragt.

8. Heizungseinrichtung nach Anspruch 7, **dadurch gekennzeichnet, dass** die Hülse (20, 120, 220) eine Dichtung (143, 145, 146) enthält für eine dichtende Verbindung zwischen einer Zuleitung (137, 237) und der Hülse (20, 120, 220) bzw. dem Gehäuse (19, 119, 219, 319), wobei sie elektrisch isolierend und/oder thermisch dämmend und vorzugsweise elastisch ist, insbesondere aus PTFE besteht.

9. Heizungseinrichtung nach Anspruch 8, **dadurch gekennzeichnet, dass** die Dichtung (143, 145) in der Hülse (20, 120, 220) befestigt ist, vorzugsweise eingeklemmt ist, und über die Hülse und/oder über den Anschlussstift (26) übersteht, wobei sie insbesondere durch eine Einbördelung des Endes der Hülse nach innen befestigt ist.

10. Heizungseinrichtung nach Anspruch 8 oder 9, **dadurch gekennzeichnet, dass** zwischen der Dichtung (143) und der Hülse (20, 120, 220) und/oder zwischen der Dichtung (143) und der Zuleitung (137, 237) eine Zusatzdichtung (145, 146) angeordnet ist, vorzugsweise ringförmig oder hülsenförmig.

11. Heizungseinrichtung nach einem der Ansprüche 8 bis 10, **dadurch gekennzeichnet, dass** die Hülse (20, 120, 220) eine umlaufende, engere Abstufung (140) zum Gehäuse (19, 119, 219, 319) hin aufweist als Anschlag der Dichtung (143, 145, 146) in Richtung auf das Gehäuse zu.

12. Heizungseinrichtung nach einem der Ansprüche 6 bis 11, **dadurch gekennzeichnet, dass** eine Zuleitung (137, 237) mit dem Anschlussstift (26, 326) verbunden ist, insbesondere eine Zuleitungslitze mit einer Außenisolierung (138, 238), wobei sie vorzugsweise angeschweißt ist und am Ende eine Steckverbindung trägt.

13. Heizungseinrichtung nach einem der Ansprüche 7 bis 12, **dadurch gekennzeichnet, dass** zwischen Anschlussstift (26, 326) und Hülse (20, 120, 220) eine Isolierung (29, 229) angeordnet ist, insbesondere eine keramische Vergussmasse.

14. Heizungseinrichtung nach einem der Ansprüche 7 bis 13, **dadurch gekennzeichnet, dass** über die Hülse (20, 120, 220) ein Schrumpfschlauch (250) geführt ist, der sich bis zu einer Zuleitung (137, 237) erstreckt und diese übergreift.

15. Heizungseinrichtung nach einem der vorhergehenden Ansprüche, **dadurch gekennzeichnet, dass** das Gehäuse (19, 119, 219, 319) der Verbindungseinrichtung an einer Gehäuseaußenwandung (31, 331) des Filters befestigt ist, und vorzugsweise das Gehäuse eine Öffnung, durch welche die Rohrheizkörper (12, 312) verlaufen und/oder eine elektrische Zuleitung erfolgt, gasdicht verschließt, wobei insbesondere die Verbindung eine Dichtschweißung (35) ist.

16. Filter (31), insbesondere Dieselrußfilter eines Kfz, **dadurch gekennzeichnet, dass** er eine Heizungseinrichtung (11, 111, 211, 311) nach einem der vorhergehenden Ansprüche aufweist.

## Claims

1. Heating device (11, 111, 211, 311) for a filter (31), particularly a diesel carbon black filter for a motor vehicle, in which the heating device has a slender tubular heater (12, 112, 212, 312) with inside heating conductor (15) and outside jacket (14), together with intermediate insulation, the heating device having a connecting device (17, 117, 217, 317) for the electrical connection of the tubular heater, **characterized in that** the connecting device is constructed for several tubular heaters and has a casing (19, 119, 219, 319) in which are brought together on a single, first, electrical connection (23, 26) the heating conductors of the tubular heater, the connecting device being additionally constructed for an at least partial mechanical fixing of the tubular heater.

2. Heating device according to claim 1, **characterized in that** the jackets (14) of the tubular heaters (12, 112, 212, 312) are led to the casing (19, 119, 219, 319) of the connecting device (17, 117, 217, 317) and are fixed thereto, preferably being non-detachably fixed and in particular welded.

3. Heating device according to claim 2, **characterized in that** the jackets (14) of the tubular heaters (12, 112, 212, 312) are connected to a closure part (21) of the connecting device (17, 117, 217, 317), particularly by laser all-round welding, and said closure part (21) is connected to the casing (19, 119, 219, 319).

4. Heating device according to one of the preceding claims, **characterized in that** the casing (19, 119, 219, 319) is metallic and the jacket (14) is electrically conductively fixed thereto and preferably the casing forms the second electrical connection, particularly the earth connection, for the tubular heaters (12, 112, 212, 312).

5. Heating device according to one of the preceding claims, **characterized in that** the first electrical connection is a common connecting strip (23), which is preferably perpendicular to the longitudinal direction of the heating conductors (15).

6. Heating device according to one of the preceding claims, **characterized in that** the first electrical connection passes into a single connecting pin (26), preferably in one piece, said connecting pin projecting out and away from the casing (19, 119, 219, 319), particularly in the longitudinal direction of the heating conductors (15).

7. Heating device according to claim 6, **characterized in that** a tubular sleeve (20, 120, 220), starting from the casing (19, 119, 219, 319), passes in spaced manner over the connecting pin (26), the sleeve preferably being metallic and welded to the casing and in particular the sleeve (20, 120, 220) is shorter than the connecting pin (26) and the latter projects therefrom.

8. Heating device according to claim 7, **characterized in that** the sleeve (20, 120, 220) contains a seal (143, 145, 146) for a sealing connection between a lead (137, 237) and the sleeve (20, 120, 220) or the casing (19, 119, 219, 319), it being electrically and/or thermally insulating and preferably elastic, being in particular made from PTFE.

9. Heating device according to claim 8, **characterized in that** the seal (143, 145) is fixed preferably clamped in the seal (20, 120, 220) and projects over the seal and/or over the connecting pin (26) and it is in particular fixed by an inward flanging of the sleeve end.

10. Heating device according to claim 8 or 9, **characterized in that** between the seal (143) and the sleeve (20, 120, 220) and/or between the seal (143) and the lead (137, 237) is provided in a preferably annular or sleeve-like manner an additional seal (145, 146).

11. Heating device according to one of the claims 8 to 10, **characterized in that** the sleeve (20, 120, 220) has a circumferential, closer stepping (140) towards the casing (19, 119, 219, 319) than the stop of the seal (143, 145, 146) in the direction of the casing.

12. Heating device according to one of the claims 6 to 11, **characterized in that** a lead (137, 237) is connected to the connecting pin (26, 236) and in particular a lead strand with an external insulation (138, 238) it preferably being welded and carries a plug connection at the end.

13. Heating device according to one of the claims 7 to 12, **characterized in that** between the connecting pin (26, 326) and the sleeve (20, 120, 220) is provided an insulation (29, 229), particularly a ceramic sealing compound.

14. Heating device according to one of the claims 7 to 13, **characterized in that** over the sleeve (20, 120, 220) is placed a shrink hose (250), which extends to and engages over a lead (137, 237).

15. Heating device according to one of the preceding claims, **characterized in that** the casing (19, 119, 219, 319) of the connecting device is fixed to a casing outer wall (31, 331) of the filter and preferably the casing seals in gas-tight manner an opening through which pass the tubular heaters (12, 312) and/or an electric lead and in particular the connection is a seal weld (35).

16. Filter (31), particularly a diesel carbon black filter of a motor vehicle, **characterized in that** it has a heating device (11, 111, 211, 311) according to one of the preceding claims.

## Revendications

1. Dispositif de chauffage (11, 111, 211, 311 ) pour filtre (31 ), notamment pour un filtre à particules pour véhicules de transport diesel, où le dispositif de chauffage présente un élément de chauffage tubulaire (12, 112, 212, 312) mince avec un conducteur chauffant (15) à l'intérieur et une enveloppe extérieure (14) ainsi qu'une isolation intermédiaire, le dispositif de chauffage présentant un moyen de raccordement (17, 117, 217, 317) pour le branchement électrique de l'élément de chauffage tubulaire, **caractérisé en ce que** le moyen de raccordement est réalisé pour plusieurs éléments de chauffage tubulaires et **en ce qu'**il présente un boîtier (19, 119, 219, 319) dans lequel les conducteurs chauffants de l'élément de chauffage tubulaire sont réunis sur une seule première connexion électrique (23, 26), où le moyen de raccordement est réalisé en plus pour l'ancrage mécanique au moins partiel de l'élément de chauffage tubulaire.

2. Dispositif de chauffage d'après la revendication 1, **caractérisé en ce que** les enveloppes (14) des éléments de chauffage tubulaires (12, 112, 212, 312) sont conduits auprès du boîtier (19, 119, 219, 319) du moyen de racordement (17, 117, 217, 317) et ils y sont fixés, de manière préférablement indesserrable, en étant notamment soudés.

3. Dispositif de chauffage d'après la revendication 2, **caractérisé en ce que** les enveloppes (14) des éléments de chauffage tubulaires (12, 112, 212, 312) sont raccordés par un élément de fermeture (21) du moyen de raccordement (17, 117, 217, 317), notamment au moyen d'un soudage circonférentiel par laser, et que cet élément de fermeture (21) est raccordé au boîtier (19, 119, 219, 319).

4. Dispositif de chauffage d'après une des revendications précédentes, **caractérisé en ce que** le boîtier (19, 119, 219, 319) est en métal et que l'enveloppe (14) est fixée sur celui-ci de manière électriquement conductible, le boîtier constituant de préférence la deuxième connexion électrique, notamment la connexion à la masse pour les éléments de chauffage tubulaires (12, 112, 212, 312).

5. Dispositif de chauffage d'après une des revendications précédentes, **caractérisé en ce que** la première connexion électrique est une barre de raccordement (23) commune, qui s'étend de préférence orthogonalement par rapport à la direction longitudinale des conducteurs chauffants (15).

6. Dispositif de chauffage d'après une des revendications précédentes, **caractérisé en ce que** la première connexion électrique se transforme en une seule fiche de connexion (26), préférablement monobloc, la fiche de connexion saillant hors du boîtier (19, 119, 219, 319) et en s'avançant notamment en direction longitudinale des conducteurs chauffants (15).

7. Dispositif de chauffage d'après la revendication 6, **caractérisé en ce qu'**au-dessus de la fiche de connexion (26) s'étend, à partir du boîtier (19, 119, 219, 319), une douille (20, 120, 220) tubulaire à une certaine distance de la fiche de connexion (26), la douille étant de préférence métallique et soudée au boîtier et notamment la douille (20, 120, 220) étant plus courte que la fiche de connexion (26), cette dernière saillant hors de cette douille.

8. Dispositif de chauffage d'après la revendication 7, **caractérisé en ce que** la douille (20, 120, 220) comprend un joint d'étanchéité (143, 145, 146) pour un raccordement étanchant entre une amenée (137, 237) et la douille (20, 120, 220) ou encore le boîtier (19, 119, 219, 319), le joint étant électriquement et/ou thermiquement isolant et de préférence élastique, en étant constitué notamment de PTFE.

9. Dispositif de chauffage d'après la revendication 8, **caractérisé en ce que** le joint d'étanchéité (143, 145) est fixé dans la douille (20, 120, 220), de préférence par coincement, et qu'il saille au-delà de la douille et/ou de la fiche de connexion (26), en étant fixé notamment par sertissage de l'extrémité de la douille vers l'intérieur.

10. Dispositif de chauffage d'après la revendication 8 ou 9, **caractérisé en ce que** entre le joint d'étanchéité (143) et la douille (20, 120, 220) et/ou entre le joint d'étanchéité (143) et l'amenée (137, 237) est disposé un joint d'étanchéité supplémentaire (145, 146), préférablement annulaire ou sous forme de douille.

11. Dispositif de chauffage d'après une des revendications de 8 à 10, **caractérisé en ce que** la douille (20, 120, 220) présente un épaulement (140) circulaire plus étroit en direction vers le boîtier (19, 119, 219, 319) en tant qu'arrêt pour le joint d'étanchéité (143, 145, 146) en direction vers le boîtier.

12. Dispositif de chauffage d'après une des revendications de 6 à 11, **caractérisé en ce qu'**une amenée (137, 237) est raccordée avec la fiche de connexion (26, 326), notamment un cordon d'amenée avec une isolation extérieure (138, 238), en étant préférablement soudée et portant à son extrémité un connecteur enfichable.

13. Dispositif de chauffage d'après une des revendications de 7 à 12, **caractérisé en ce que** entre la fiche de connexion (26, 326) et la douille (20, 120, 220) est disposé une isolation (29, 229), notamment une masse de scellement céramique.

14. Dispositif de chauffage d'après une des revendications de 7 à 13, **caractérisé en ce que** au-dessus de la douille (20, 120, 220) est conduite une gaine thermorétractable (250), qui s'étend jusqu'à une amenée (137, 237) en la recouvrant.

15. Dispositif de chauffage d'après une des revendications précédentes, **caractérisé en ce que** le boîtier (19, 119, 219, 319) du moyen de raccordement est fixé sur une paroi extérieure de boîtier (31, 331) du filtre et que de préférence le boîtier referme de manière étanche aux gaz une ouverture à travers laquelle s'étendent les éléments de chauffage tubulaires (12, 312) et/ou à travers laquelle passe le conducteur d'amenée électrique, le raccordement étant notamment une soudure d'étanchéité (35).

16. Filtre (31), notamment filtre à particules pour véhicules de transport diesel, **caractérisé en ce qu'**il présente un dispositif de chauffage (11, 111, 211, 311) d'après une des revendications précédentes.
